# EUROPEAN PATENT SPECIFICATION

(11) **EP 2 288 113 B1**
(45) Date of publication and mention of the grant of the patent: **24.09.2014**
(21) Application number: 10173581.9
(22) Date of filing: 20.08.2010
(51) Int. Cl.: H04L 29/08

(54) **Apparatuses for downloading applications via application lists**
Vorrichtungen zum Herunterladen von Applikationen mittels Applikationslisten
Dispositifs de téléchargement d'applications par des listes d'applications

(30) Priority: 21.08.2009 KR 20090077555; 13.09.2009 KR 20090086206; 09.08.2010 KR 20100076505
(43) Date of publication of application: 23.02.2011
(73) Proprietor: Samsung Electronics Co., Ltd., Suwon-si, Gyeonggi-do, 443-742 (KR)
(72) Inventor: Lee, Min-cheol, Seoul (KR); Lee, Nam-geol, Seoul (KR); Yu, Seung-dong, Gyeonggi-do (KR); Chang, Woo-yong, Gyeonggi-do (KR); Park, Se-jun, Gyeonggi-do (KR); Moon, Min-jeong, Gyeonggi-do (KR)
(74) Representative: Birchenough, Lewis

(56) References cited:
- EP-A1- 1 909 457
- WO-A1-2008/123656
- US-A1- 2007 106 984

## Description

### CLAIM OF PRIORITY

This application claims the benefit under 35 U.S.C. § 119 (a) from Korean Patent Application Nos. 2009-0077555 filed on August 21, 2009, 2009-0086206 filed on September 13, 2009, and 2010-0076505 filed August 9, 2010, in the Korean Intellectual Property Office.

### BACKGROUND OF THE INVENTION

### Field of the Invention

The present disclosure relates generally to an application downloading method, an application providing method, and a user terminal using the same, and more particular, to an application downloading method and an application providing service by which a user terminal downloads an application from a server, and a user terminal using the same.

### Description of the Related Art

Recently, an application store for selling applications used in a mobile apparatus online is popularized. A representative example of the application store is the App Store of Apple Inc.

Accordingly, a user gets access to an application store on the internet using his/her own mobile apparatus, makes payment for internet commerce, and then directly downloads a desired application. That is, the user can download an application using his/her own mobile apparatus.

However, since the application store provided on the internet sells a large amount of applications, the user needs much time to search for a desired application. Also, the user may not know what application is applicable to the user's apparatus.

The user wishes to download a desired application with ease. Accordingly, what is needed is a method for downloading an application desired by a user easily and simply.

EP 1909457 describes a technique for receiving adaptive broadcast signals. US 2007/0106984 describes a technique for installing software applications on a computer system.

### SUMMARY OF THE INVENTION

The present disclosure has been provided in part to address the above-mentioned issues occurring in the conventional arrangement. Embodiments of the present invention perform an application downloading method and an application providing method, in which a user terminal sends user terminal information to a server, receives an application list generated based on the user terminal information, and displays the received application list on a screen, and a user terminal using the same.

Other embodiments of the present invention perform an application providing method in which a server receives user terminal information from a user terminal, generates an application list based on the user terminal information, and sends the application list to the user terminal.

One exemplary embodiment of the present invention performs an application downloading method of a user terminal which downloads an application from a server, the method including: sending at least one of user terminal information, network information, service provider information, and user information to the server, receiving an application list which is generated based on the at least one of the user terminal information, the network information, the service provider information, and the user information, and displaying the application list on a screen.

The user terminal information may include at least one of a manufacturer, a model name, a definition, CPU information, storage information, storing capacity, and information of presence/absence of a touch screen of the user terminal.

The network information may be information relating to a data rate of a network connected between the user terminal and the server.

The service provider information may be information relating to an application that is provided by a service provider of the user terminal.

The user information may include at least one of a buying history of a user of the user terminal and preference information of the user.

The sending includes giving priorities to properties included in the at least one of the user terminal information, the network information, the service provider information, and the user information.

The sending may include adding flags representing priorities to properties included in the at least one of the user terminal information, the network information, the service provider information, and the user information.

The displaying may include displaying the application list on the screen according to properties included in the at least one of the user terminal information, the network information, the service provider information, and the user information.

According to one exemplary aspect of the present invention, there is provided a user terminal for downloading an application from a server, the user terminal comprising: a network interface for accessing the server over one or more networks; a display unit for displaying an application list; and a controller for controlling the network interface to send at least one of user terminal information, network information, service provider information, and user information to the server and receive an application list which is generated based on the at least one of the user terminal information, the network information, the service provider information, and the user information, and for controlling display of the application list on the display unit; wherein the controller is adapted to control giving priorities to properties included in the at least one of the user terminal information, the network information, the service provider information, and the user information.

The user terminal information may include at least one of a manufacturer, a model name, a definition, CPU information, storage information, storing capacity, and information relating to presence/absence of a touch screen of the user terminal.

The network information may be information relating to a data rate of a network connected between the user terminal and the server.

The service provider information may be information relating to an application that is provided by a service provider of the user terminal.

The user information may include at least one of a buying history of a user of the user terminal and preference information of the user.

The controller may control adding flags representing priorities of properties included in the at least one of the user terminal information, the network information, the service provider information, and the user information, and sending the at least one information.

The controller may control displaying the application list on the screen according to properties included in the at least one of the user terminal information, the network information, the service provider information, and the user information.

Another exemplary embodiment of the present invention performs an application providing method of a server which provides an application to a user terminal, the method including: receiving at least one of user terminal information, network information, service provider information, and user information from the user terminal, extracting at least one application from pre-stored applications, based on the at least one of the user terminal information, the network information, the service provider information, and the user information, and generating an application list using the extracted application and sending the application list to the user terminal.

The extracting may include extracting at least one application executable at the user terminal from the pre-stored applications based on the user terminal information.

The extracting may include extracting at least one application downloadable within a specific time according to a data rate of the network based on the network information.

The extracting may include extracting at least one application provided by a service provider of the user terminal based on the service provider information.

The extracting may include extracting at least one application according to a buying history and preference of the user based on the user information.

The application providing method may further include storing the buying history and the preference of the user, and the extracting may include extracting at least one application according to the stored buying history and preference of the user.

The application providing method may further include changing at least one of a condition for the user terminal information, a condition for the network information, and a condition for the service provider information to extract an application in the extracting operati on.

According to another exemplary aspect of the present invention, there is provided a server comprising: a network interface for accessing a user terminal over one or more networks; and a controller for controlling the network interface to receive at least one of user terminal information, network information, service provider information, and user information, extract at least one application from stored applications based on the at least one of the user terminal information, the network information, the service provider information, and the user information, generate an application list using the extracted application, and send the application list to the user terminal; wherein the controller is adapted to extract the at least one application based on priorities given to properties included in the at least one of the user terminal information, the network information, the service provider information, and the user information.

The controller may extract at least one application executable at the user terminal from the stored applications based on the user terminal information.

The controller may extract at least one application downloadable within a specific time according to a data rate of the network based on the network information.

The controller may extract at least one application that is provided by a service provider of the user terminal based on the service provider information.

The controller may extract at least one application according to a buying history and preference of the user based on the user information.

The server may further include a database unit for storing the buying history and the preference of the user, and the controller may extract at lest one application according to the stored buying history and preference of the user.

The server may further include a storage unit for storing at least one of a condition for the user terminal information, a condition for the network information, and a condition for the service provider information to extract an application, and the controller may change at least one of the condition for the user terminal information, the condition for the network information, and the condition for the service provider information.

According to diverse exemplary embodiments, since the application downloading method and the application providing method in which the user terminal transmits the user terminal information to the server, receives the application list generated based on the user terminal information, and displays the received application list on the screen, and the user terminal using the same are provided, the user can download the desired application more easily and simply.

In particular, since the application list suitable for the user terminal is received from the server, the user can avoid searching unnecessary applications when downloading the desired application.

### BRIEF DESCRIPTION OF THE DRAWINGS

These and/or other exemplary aspects of the present invention will become more apparent and more readily appreciated from the following description of exemplary embodiments thereof, with reference to the accompanying drawings, in which:

FIG. 1 is a flowchart of an application downloading method according to an exemplary embodiment;

FIGS. 2A to 2H are views of a process of downloading a map application if a user terminal is a camera according to an exemplary embodiment;

FIG. 3 is a block diagram of a user terminal 100 according to an exemplary embodiment;

FIG. 4 is a view of a screen on which an application corresponding to a definition is displayed after an application corresponding to a model name is displayed according to an exemplary embodiment;

FIG. 5 is a diagram of a data transmitting system according to an exemplary embodiment;

FIG. 6 is a flowchart of an application providing method according to an exemplary embodiment;

FIG. 7 is a diagram of an application filtering process according to an exemplary embodiment;

FIG. 8 is a block diagram of a terminal according to an exemplary embodiment; and

FIG. 9 is a block diagram of a server according to an exemplary embodiment.

### DETAILED DESCRIPTION

A discussion will now be made herein below in detail regarding certain exemplary embodiments of the present invention, examples of which are illustrated in the accompanying drawings, wherein like reference numerals refer to the like elements throughout. The exemplary embodiments are described below to explain the present invention by referring to the figures.

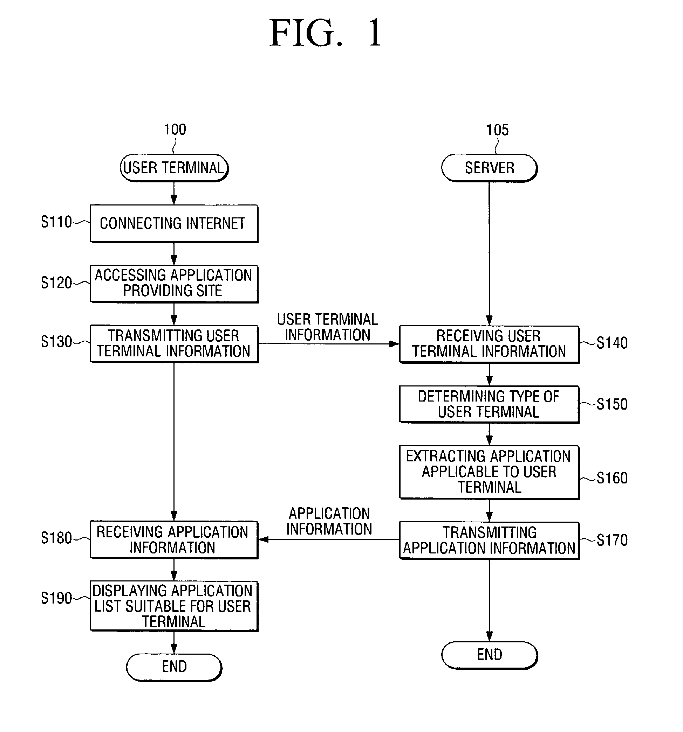

FIG. 1 is a flowchart of an application downloading method according to an exemplary embodiment.

A user terminal 100 is connected to Internet (S110). The user terminal 100 may get access to the Internet through a wired LAN or a wireless network such as wireless LAN or WiBro.

After that, the user terminal 100 gets access to a server 105 that provides an application providing site according to a user's manipulation (S120). When getting access to the server 105 of the application providing site, the user terminal 100 transmits user terminal information to the server 105 (S130).

The user terminal information recited herein refers to information indicating a specification property of the user terminal 100. More specifically, the user terminal information includes at least one of a model name, a definition, CPU information, storage information, a storing capacity, and information ofpresence/absence of a touch screen ofthe user terminal 100. The user terminal information may be metadata of the user terminal 100.

Also, the user terminal 100 may give priorities to the user terminal information and then transmit the user terminal information. For example, if a user wishes to give the priority to the model name, the user terminal 100 adds a priority flag to the model name information of the user terminal information and then transmits the user terminal information with the priority flag. Then, the server 105 extracts an application suitable for the user terminal 100 by applying the model name preferentially.

As described above, if the user terminal 100 transmits the user terminal information to the server 105, the server 105 receives the user terminal information over the internet (S140). The server 105 determines the type of the user terminal 100 or the property of the user terminal 100 based on the user terminal information (S 150).

The server 105 extracts an application applicable to the user terminal 100 from among stored applications based on the determined type or property of the user terminal 100 (S160). For example, if the server 105 receives the model name as the user terminal information, the server 105 extracts an application executable at the corresponding model. If the server 105 receives the definition as the user terminal information, the server 105 extracts an application executable at the received definition.

After that, the server 105 transmits information relating to the extracted application to the user terminal 100 (S 170). Then, the user terminal 100 receives the application information from the server 105 (S 180).

The user terminal 100 displays an application list suitable for the user terminal 100 on a screen using the received application information (S 190). At this time, the user terminal 100 may display the application list according to the properties included in the user terminal information. For example, the user terminal 100 may group the applications suitable for the model name into one group and display the group on the screen, or may display one group of applications suitable for the definition on the screen.

Also, the user terminal 100 may give priorities to the properties of the user terminal information. For example, the user terminal 100 may display the applications suitable for the model name on the screen first and then display the applications suitable for the definition on the screen.

Through the above-described process, the user terminal 100 can identify the list of applications suitable for the user terminal 100 from the server 105, so that the user can find an application easily as he/she desires.

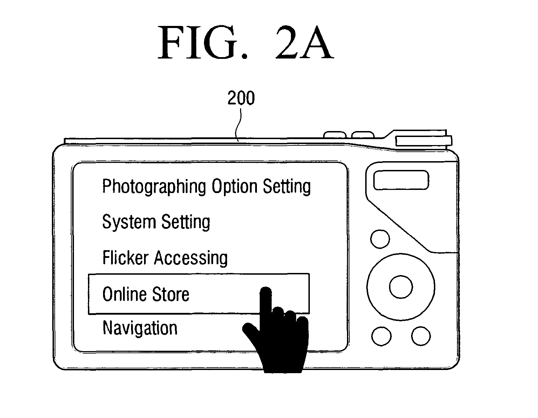

Hereinafter, a process of downloading a map application if the user terminal 100 is a camera will be explained with reference to FIGS. 2A to 2H. FIGS. 2A to 2H are views illustrating a process of downloading a map application if the user terminal 100 is a camera 200.

FIG. 2A is view of a display screen of the camera 200 on which a main menu is displayed. As shown in FIG. 2A, the main menu of the camera 200 includes an item 'Online Store'. The item 'Online Store' functions to get access to a site providing applications on the internet. Therefore, if the user selects the item 'Online Store', the camera 200 gets access to the server 105 that provides an application providing site over the Internet. Then, the camera 200 transmits its own user terminal information to the server 105.

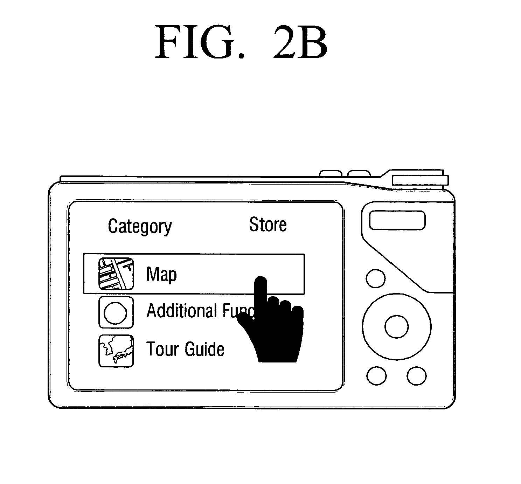

Then, the camera 200 displays a category of applications provided by the online store on the display screen as shown in FIG. 2B. The displayed category includes applications that are usable in the camera 200.

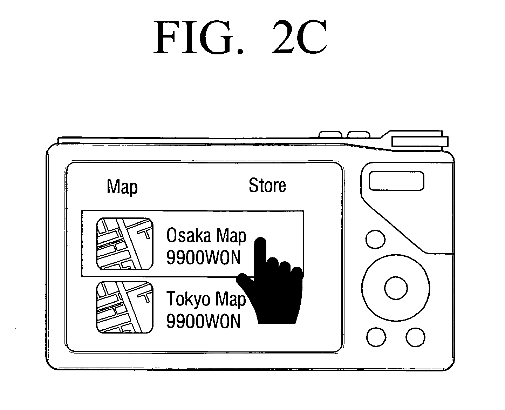

If the user selects an item 'Map' from the category, the camera 200 displays a list of map applications that can be downloaded on the screen as shown in FIG. 2C. The map applications shown in FIG. 2C are map applications that are selected by the application providing server 105 as being suitable for the camera 200 with reference to the user terminal information of the camera 200. More specifically, the application providing server 105 may extract a map application suitable for the model of the camera 200. Also, the application providing sever 105 may extract a map application suitable for the definition of the camera 200.

As described above, the camera 200 receives the list of application suitable for the use from the server 105, and displays the list of applications on the screen as shown in FIG. 2C. Accordingly, the user can select an application executable at the camera 200 with ease.

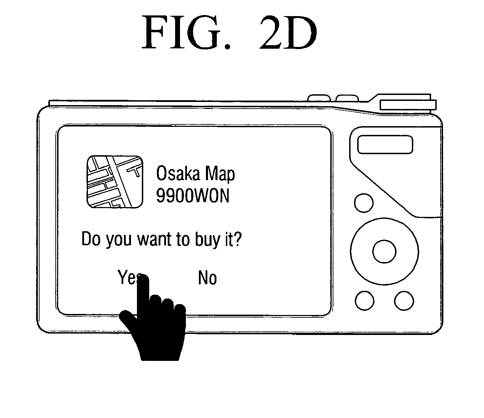

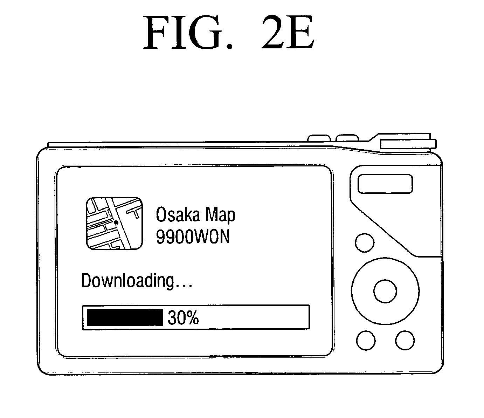

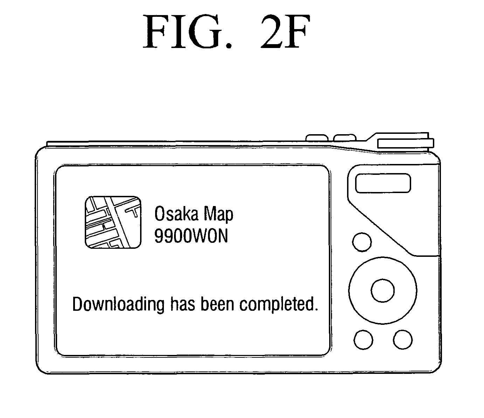

If the user selects an item 'Osaka Map' in FIG. 2C, a message asking a user of whether or not the user will buy the application 'Osaka Map' is displayed as shown in FIG. 2D. If the user selects 'yes', a buying procedure is performed. Then, the selected application is downloaded as shown in FIG. 2E. If the downloading is completed, a message indicating that the downloading has been completed is displayed on the screen as shown in FIG. 2F.

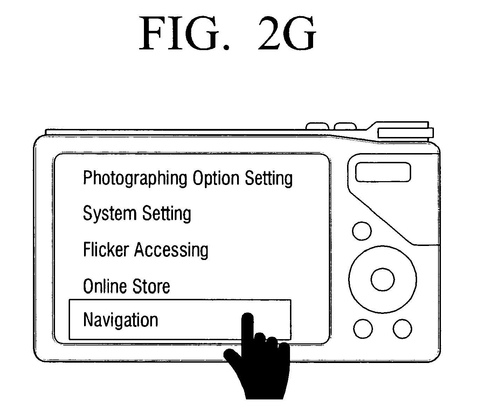

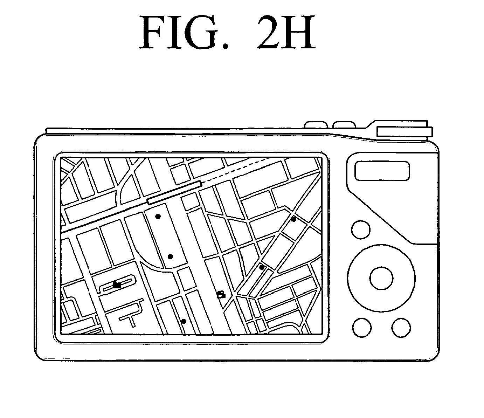

If the user selects an item 'Navigation' from the main menu after having downloaded the application 'Osaka Map', as shown in FIG. 2G, the user can use the application 'Osaka Map' by executing it on the navigation as shown in FIG. 2H.

As described above, by transmitting the user terminal information to the server 105, the camera 200 receives the list of application suitable for the use therein and displays the list. Therefore, the user checks only the application information suitable for the camera 200 from the online store using the camera 200, and finds and downloads a desired application rapidly.

In this embodiment, the user terminal 100 is the camera 200. However, the user terminal 100 may be any other types of apparatuses. More specifically, the user terminal 100 may be a mobile phone, a digital album, and a TV. Also, the suitable application is different according to what apparatus the user terminal 100 is.

For example, if the user terminal 100 is a mobile phone, an application suitable for the mobile phone may include a mobile bell sound, a mobile widget, and contents. If the user terminal 100 is a digital album, a suitable application may include a premium application, a widget, and famous artist's photos. Also, if the user terminal 100 is a TV, a suitable application may be a premium application and a moving picture file.

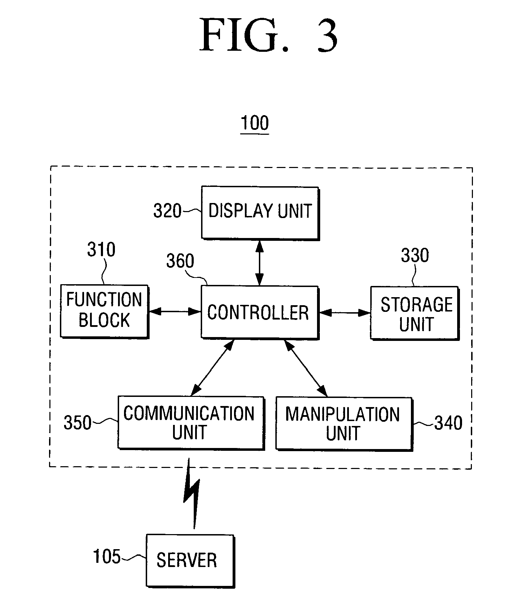

Hereinafter, the user terminal 100 will be explained in detail with reference to FIG. 3. FIG. 3 is a block diagram of the user terminal 100 according to an exemplary embodiment. As shown in FIG. 3, the user terminal 100 includes a function block 310, a display unit 320, a storage unit 330, a manipulation unit 340, a communication unit 350, and a controller 360.

The function block 310 performs the original function of the user terminal 100. If the user terminal 100 is an MP3 player, the function block 310 performs the MP3 player function, and if the user terminal 100 is a portable multimedia player (PMP), the function block 310 performs the PMP function.

The display unit 320 displays an input image and displays a guide user interface (GUI). More specifically, the display unit 320 displays the screens as shown in FIGS. 2A to 2H, such as the main menu and the application list.

The storage unit 330 is a storage medium that stores a plurality of contents. The storage unit 330 may store a downloaded application. The storage unit 330 may be a hard disk or a nonvolatile memory.

The manipulation unit 340 receives a user's manipulation to input a specific command. For example, the manipulation unit 340 may include a button, a wheel, and a touch screen.

The communication unit 350 is communicably connected to the application providing server 105. The communication unit 350 transmits the user terminal information to the application providing server 105, and receives the application list from the application providing server 105. The communication unit 350 may be a wired communication module such as a wired LAN card, or a wireless communication module such as a wireless LAN or Bluetooth.

The controller 360 performs the operations illustrated in the flow chart of FIG. 1 and performs the processes of FIGS. 2A to 2H, so that the user terminal 100 can display the list of suitable applications received from the server 105.

More specifically, the controller 360 controls the communication unit 350 to transmit the user terminal information to the application providing server 105 and receive the application list generated based on the user terminal information. The user terminal information recited herein refers to information indicating the specification property of the user terminal 100. More specifically, the user terminal information includes at least one of a model name, a definition, CPU information, storage information, storing capacity, and information of presence/absence of a touch screen of the user terminal 100. The user terminal information may be metadata of the user terminal 100.

The controller 260 may give priorities to the user terminal information. For example, if the user wishes to give priority to the model name, the controller 360 adds a priority flag to the model name information of the user terminal information and transmits the user terminal information with the priority flag. Then, the server 105 extracts an application suitable for the user terminal 100 by applying the model name preferentially.

Also, the controller 360 controls the display unit 320 to display the application list on the screen. Also, the controller 360 controls the display unit 320 to display the application list according to the properties included in the user terminal information.

As described, by transmitting the user terminal information to the server 105, the controller 360 of the user terminal 100 receives the list of applications suitable for the use in the user terminal 100 and displays the list. Therefore, the user checks only the information of the applications suitable for the user terminal 100 from the online store using the user terminal 100, and finds and downloads a desired application rapidly.

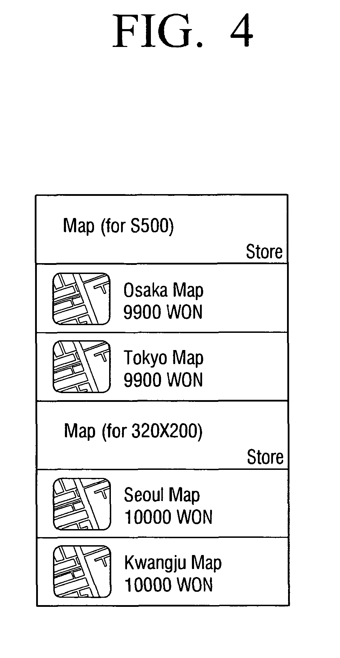

FIG. 4 is a view of a screen on which an application according to a definition is displayed after an application according to a model name is displayed according to an exemplary embodiment. When the user gets access to an application providing site using the user terminal 100, the user terminal 100 displays a list of applications on the screen as shown in FIG. 4.

The user terminal 100 in FIG. 4 has a model name 'S500' and a definition '320*200'. The user terminal 100 displays a list of map applications usable in the model name 'S500' preferentially and then displays a list of map applications applicable to the definition 320*200. That is, it can be seen that priority is given to the applications suitable for the model name of the user terminal 100. The priority may be given to what the user wants.

Therefore, the user can identify the list of applications suitable for the use in the user terminal 100 simply by getting access to the application providing site as shown in FIG. 4.

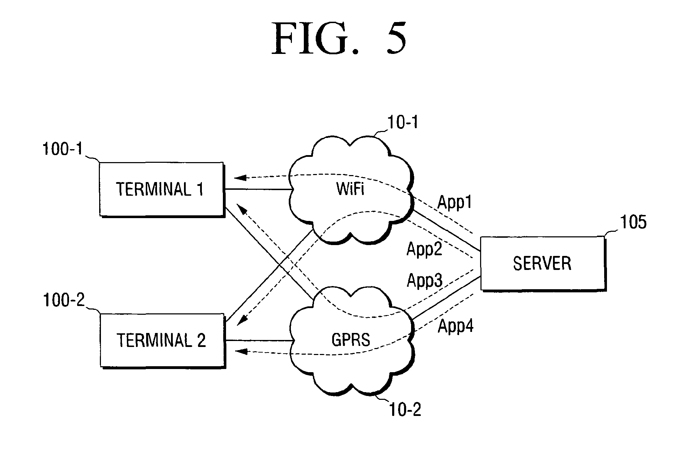

FIG. 5 is a diagram of a data transmitting system according to an exemplary embodiment. An application transmitting system according to an exemplary embodiment provides an application, which is created by a Contents Provider (CP) and stored to a server 200, to a terminal over a network.

As shown in FIG. 5, the application transmitting system includes a plurality of terminals 100-1 and 100-2, a plurality of networks 10-1 and 10-2, and a server 105.

The first terminal 100-1 and the second terminal 100-2 correspond to user terminals or clients, and can receive an applications stored to the server 105 by accessing the server 105 over the networks 10-1 and 10-2. Hence, a user of the user terminal can utilize the received application.

The first terminal 100-1 and the second terminal 100-2 send an application list to the server 105. The server 105 can select some items from the received application list and use the selected application. In order to acquire the application list optimized to itself, the first terminal 100-1 and the second terminal 100-2, transmit their respective user terminal information to the server 105 as well.

The server 105 stores applications, contents, and data created/generated by the CP, and sends the application list to the first terminal 100-1 or the second terminal 100-2 according to the request of the first terminal 100-1 or the second terminal 100-2. Herein, the CP creates or generates the application or the contents, and sends the created application or contents to the server 105 over the network 10-1 or 10-2 for storage by the server 105.

The server 105 typically receives the request for the application list together with the user terminal information of the first terminal 100-1 or the second terminal 100-2 as stated above. Accordingly, the server 105 extracts applications optimized for the first terminal 100-1, or the second terminal 100-2, from the stored applications, and provides the list of the extracted applications to the first terminal 100-1 or the second terminal 100-2.

The user terminal information includes information relating to at least one of a manufacturer of the terminal, a model name, a definition, CPU information, storage information, storing capacity, presence/absence of a touch screen, a serial number, a user, and an application history. Based on the user terminal information, the server 105 extracts the application executable at the terminal or the application designated for the terminal.

The server 105 determines network information which carries the request for the application list, extracts the optimized applications according to the determined network information, and provides the list of the extracted applications.

Herein, the network information is information relating to a data rate of the network which delivers the user terminal information. In other words, the network information is information relating to a data rate of the network to which the user terminal 100 and the server 100 are connected. Since the applications have various capacities, the low data rate of the network can be troublesome in the transmission of the large capacity application. Thus, the server 105 extracts the optimized applications based on the information of the network which carries the request for the application list, and provides the list of the extracted applications.

In this exemplary embodiment, WiFi 10-1 and a General Packet Radio Service (GPRS) 10-2 are exemplified to demonstrate two possible examples of the various types of networks in communication with the first terminal 100-1 and the second terminal 100-2. Note that the present disclosure can employ other various networks.

As such, the server 105 stores the applications created by the CP. When receiving the request for the application list from the terminal, the server 105 provides the list of the applications optimized for each terminal among the stored applications using the user terminal information and the network information.

In FIG. 5, as for the request for the application list of the first terminal 100-1 over the @WiFi 10-1, the server 105 provides the application1 (App1) to the first terminal 100-1 over the WiFi 10-1. As for the request for the application list of the second terminal 100-2 over the ⓑWiFi 10-1, the server 105 provides the application2 (App2) to the second terminal 100-2 over the WiFi 10-1. As for the request for the application list of the first terminal 100-1 over the ⓒGPRS 10-2, the server 105 provides the application3 (App3) to the first terminal 100-1 over the GPRS 10-2. As for the request for the application list of the second terminal 100-2 over the ⓓGPRS 10-2, the server 105 provides the application4 (App4) to the second terminal 100-2 over the GPRS 10-2.

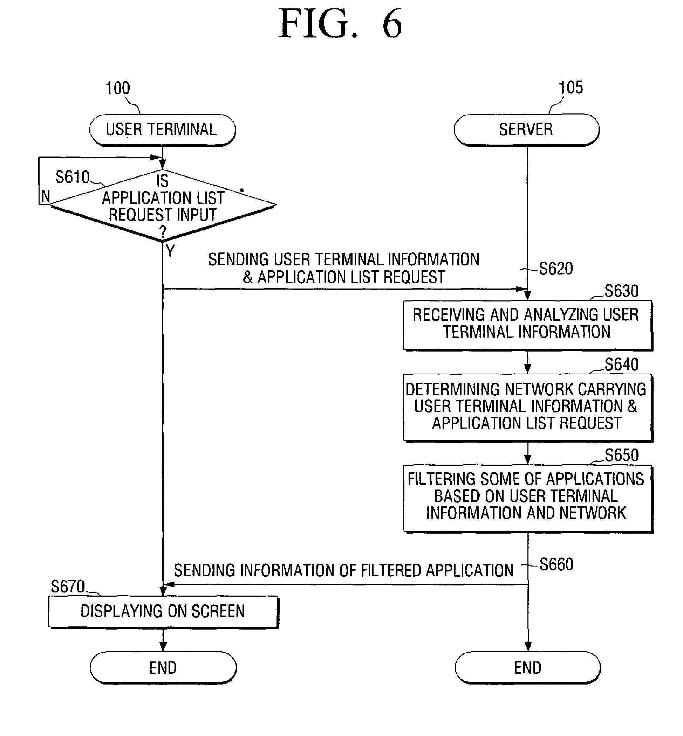

FIG. 6 is a flowchart of an application providing method according to an exemplary embodiment.

When receiving the request for the application list from the user (S610-Y), the user terminal 100 requests the application list from the server 105 and sends the information of the terminal (user terminal information) to the server 105 (S620).

The server 105 analyzes the USER terminal information received from the user terminal 100 (S630) and determines the reception path of the user terminal information and the application list request, that is, the network information (S640). Based on the analyzed user terminal information and the determined network information, the server 105 filters some ofthe applications stored to the server 105 (S650), and, the server 105 then transmits information of the filtered applications to the terminal 100 (S660). Herein, the information of the filtered applications indicates the filtered application list.

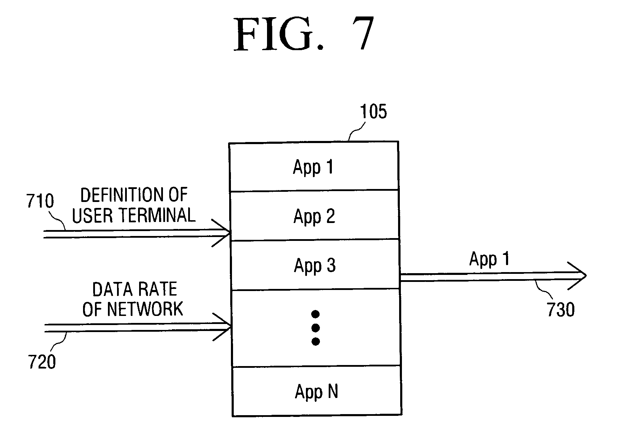

The application filtering will now be described with reference to FIG. 7. FIG. 7 depicts the application filtering process.

Upon receiving the user terminal information from the user terminal 100 and determining the network information, the server 200 extracts details of the user terminal 100, based on the user terminal information and the network information.

For example, when receiving the information of the manufacturer and the type of the terminal as the user terminal information, the server 105 can extract the details of the user terminal 100, such as the definition 710 of the user terminal 100, using the user terminal information as shown in FIG. 7. Likewise, the server 105 can extract the details of the network, such as the data rate 720 ofthe network. Such details may be pre-stored to the server 105.

Using the details such as the definition 710 of the terminal and the data rate 720 of the network, the server 105 extracts the list of the applications 730 to provide to the user terminal 100 from among the applications stored to the server 105, and the server 105 sends the list of the extracted applications to the user terminal 100.

Now referring back to FIG. 6, the user terminal 100 displays the application list received from the server 105 on a screen (S670) so that the user of the user terminal 100 can select his/her intended application from the application list.

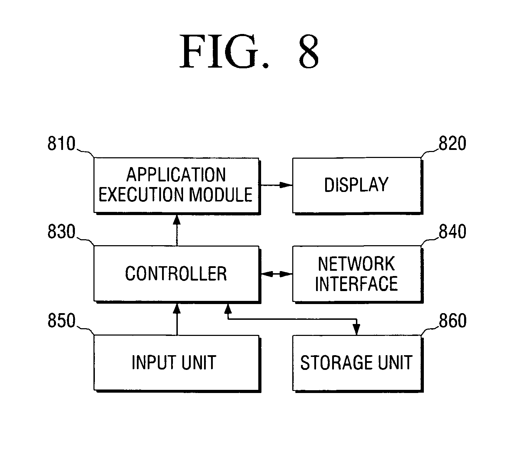

FIG. 8 is a block diagram of the aforementioned user terminal 100 discussed regarding FIGS. 5 to 7. The user terminal 100 includes an application execution module 810, a display 820, a controller 830, a network interface 840, an input part 850, and a storage unit 860.

The application execution module 810 image-processes the application list received from the server 105, controls the display of the application list on the screen, and controls the selection of one application of the application list and executes the application received from the server 105 at the user terminal 100. The application execution module 810 sends a signal to the display 820 to display the application list and the selected application on the screen. Accordingly, the display 820 displays the application list and the selected application on the screen.

The network interface 840 functions as a communication path of the user terminal 100 with the server 105 over the network. Through the network interface 840, the user terminal 100 sends the application list request, the user terminal information, and the request for the application to the server 105, and receives the application list and the selected application from the server 105.

The input part 850 is connected to a mouse or a keyboard to receive a user's manipulation. In particular, the input part 850 receives the user's command requesting the application list and the user's command requesting the application and forwards the received commands to the controller 830.

The storage unit 860 stores a program to operate the user terminal 100, various information, data, and applications received from the server 105. The storage unit 860 can be implemented using a hard disc, a nonvolatile memory, etc.

The controller 830 controls the user terminal 100. More specifically, the controller 830 controls the sending of the application list request, the user terminal information, and the application request to the server 105 via the network interface 840, also controls displaying the application list received from the server 105 on the display 820, and controls execution of the application received from the server 105 at the user terminal 100.

In addition, the controller 830 selects one ofthe networks connected to the user terminal 100 so that the user terminal 100 can communicate with the server 105 over the selected network.

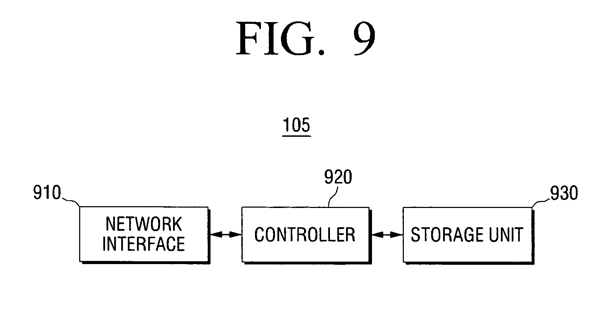

FIG. 9 is a block diagram of the server 105 mentioned above. The server 105 includes a network interface 910, a controller 920, and a storage unit 930.

The network interface 910 functions as a communication path of the server 105 with the user terminal 100 over the network. Through the network interface 910, the server 105 receives the application list request, the user terminal information, and the request for the application from the user terminal 100, and sends the application list and the application selected by the user to the user terminal 100.

The storage unit 930 stores a program to operate the server 105 and data such as applications received from the CP and contents. As the information relating to the applications received from the CP, the storage unit 930 stores information of the user terminal 100 capable of executing the application, information regarding the application capacity, and so forth. The storage 930 can be implemented using a hard disc, a nonvolatile memory, etc.

The controller 920 controls the server 105. More specifically, upon receiving the application list request and the user terminal information from the terminal 100 via the network interface 910, the controller 920 extracts the details of the user terminal 100 by analyzing the received user terminal information, determines the information of the network which is the reception path of the application list request and the user terminal information, and extracts the details of the network based on the determined information.

Based on the user terminal information and the network information, the controller 920 filters the applications optimized for the user terminal 100 from among the applications received from the CP and stored to the storage unit 930, and sends the list of the optimized applications to the user terminal 100.

As such, the server 105 can selectively provide the application applicable to the user terminal 100 to thus offer the convenience in the application use to the user.

Meanwhile, a person of ordinary skill in the art should understand and appreciate that while the first terminal 100-1 and the second terminal 100-2 are connected directly to the server 105 over the networks 10-1 and 10-2, this example has been provided merely for illustrative purposes and does not in any way limit the claimed invention. Notably, the first terminal 100-1 and the second terminal 100-2 can be connected to the server 105 over the networks 10-1 and 10-2 by means of a separate medium such as PC. For example, provided that the first terminal 100-1 is a mobile phone, when the mobile phone is connected to the PC and the application list is received from the server 105 over the networks 10-1 and 10-2 usable by the PC, the application selected from the application list can be provided to the mobile phone via the PC.

Although the user terminal in the above exemplary embodiment sends the user terminal information and the network information, it can send service provider information or user information additionally.

Herein, the service provider information is information relating to the application that can be provided by a service provider of the user terminal 100 (that is, the contents provider (CP)). The user information is information indicating details of use of an application service by a user of the user terminal 100, and includes at least one of an application buying history and application preference information of the user.

As described above, the user terminal 100 may send at least one of the user terminal information, the network information, the service provider information, and the user information to the server 105. In this case, the user terminal 100 may give priorities to the properties included in the at least one ofthe user terminal information, the network information, the service provider information, and the user information. Also, in order to give the priorities to the properties of the information, the user terminal 100 may add a flag indicating the priority given to the properties included in the at least one of the user terminal information, the network information, the service provider information, and the user information.

Also, the user terminal 100 may display the application list according to the properties included in the at least one of the user terminal information, the network information, the service provider information, and the user information. For example, the user terminal 100 may display only the application list corresponding to the user terminal information on the screen. Also, the user terminal 100 may display the application list corresponding to the service provider information and the application list corresponding to the user information on separate areas separately.

Accordingly, the server 105 receives the at least one of the user terminal information, the network information, the service provider information, and the user information from the user terminal 100. Based on the at least one of the user terminal information, the network information, the service provider information, and the user information, the server 105 extract at least one application from the pre-stored applications. The server 105 generates an application list using the extracted application and sends the application list to the user terminal 100.

More specifically, using the user terminal information, the network information, the service provider information, and the user information, the server 105 extracts at least one application corresponding to each of the aforementioned information as follows:

Based on the user terminal information, the server 105 may extract at least one application executable at the user terminal 100 from the pre-stored applications. For example, the server 105 may recognize a screen definition of the user terminal 100 based on the user terminal information and generate an application list by extracting the applications executable at the screen definition ofthe user terminal 100.

Also, based on the network information, the server 105 may extract at least one application downloadable within a specific time according to the data rate of the network. For example, based on the network information, the server 105 may generate an application list by extracting applications of capacities that can be downloaded within five minutes.

Also, based on the service provider information, the server 105 may extract at least one application that can be provided by a service provider of the user terminal. For example, the server 105 may generate an application list by extracting applications that can be provided by You Tube.

Also, based on the user information, the server 105 may extract at least one application according to a user's busying history and user's preference. For example, the server 105 may generate an application list by extracting applications except for the applications the user have bought previously.

The sever 105 may store a user's buying history and user's preference for each user. The server 105 updates the user's buying history and the user's preference information whenever the user buys an application or inputs preference information. Accordingly, the server 105 can extract at least one application according to user's buying history and preference currently stored in the user terminal 100.

Also, the server 105 may change at least one of a condition for the user terminal information, a condition for the network information, and a condition for the service provider information for extracting an application.

The condition for the user terminal information indicates an internal condition for the server 105 to extract an application according to the user terminal information received from the user terminal 100.

The condition for the network information indicates an internal condition for the server 105 to extract an application according to the network information received from the user terminal 100.

The condition for the service provider information indicates an internal condition for the server 105 to extract an application according to the service provider information received from the user terminal 100.

As described above, the server 105 may change the internal condition to extract the application and extract the application suitable for the changed condition.

As described above, the user terminal 100 can send at least one of the user terminal information, the network information, the service provider information, and the user information to the server 105. The server 105 generates the application list according to the request from the user terminal using the at least one of the user terminal information, the network information, the service provider information, and the user information. Accordingly, the user terminal 100 can receive the application list suitable for the user terminal 100 from the server 105.

It should be understood that any user terminal that can download an application may be applied as the user terminal 100. For example, the user terminal 100 may be an MP3 player, a portable multimedia player (PMP), a mobile phone, or a personal digital assistant (PDA).

Although a few exemplary embodiments of the present invention have been shown and described, it would be appreciated by those skilled in the art that changes may be made in these exemplary embodiments without departing from the scope of the invention, as defined by the claims and their equivalents.

## Claims

1. A user terminal (100) for downloading an application from a server (105), the user terminal comprising:
a network interface (840) for accessing the server (105) over one or more networks (10-1, 10-2);
a display unit (820) for displaying an application list; and
a controller (830) for controlling the network interface (840) to send at least one of user terminal information, network information, service provider information, and user information to the server (105) and receive an application list which is generated based on the at least one of the user terminal information, the network information, the service provider information, and the user information, and for controlling display of the application list on the display unit (820);
wherein the controller (830) is adapted to control adding priorities to properties included in the at least one of the user terminal information, the network information, the service provider information, and the user information.

2. The user terminal of claim 1, wherein the user terminal information comprises at least one of a manufacturer, a model name, a resolution, CPU information, storage information, storing capacity, and information relating to presence/absence of a touch screen of the user terminal (100).

3. The user terminal of claim 1 or 2, wherein the network information is information relating to a data rate of a network (10-1, 10-2) connected between the user terminal (100) and the server (105).

4. The user terminal of any one of claims 1 to 3, wherein the service provider information is information relating to an application that is provided by a service provider of the user terminal (100).

5. The user terminal of any one of claims 1 to 4, wherein the user information comprises at least one of a buying history of a user of the user terminal (100) and preference information of the user.

6. The user terminal of claim 1, wherein the controller (830) controls adding flags representing priorities of properties included in the at least one of the user terminal information, the network information, the service provider information, and the user information, and sending the at least one information.

7. The user terminal of any one of claims 1 to 6, wherein the controller (830) controls displaying the application list on the screen according to properties included in the at least one of the user terminal information, the network information, the service provider information, and the user information.

8. A server (105) comprising:
a network interface (910) for accessing a user terminal (100) over one or more networks (10-1, 10-2); and
a controller (920) for controlling the network interface (910) to receive from the user terminal at least one of user terminal information, network information, service provider information, and user information, extract at least one application from stored applications based on the at least one of the user terminal information, the network information, the service provider information, and the user information, generate an application list using the extracted application, and send the application list to the user terminal( 100);
wherein the controller (920) is adapted to extract the at least one application based on priorities added to properties included in the at least one of the user terminal information, the network information, the service provider information, and the user information.

9. The server of claim 8, wherein the controller (920) extracts at least one application executable at the user terminal (100) from the stored applications based on the user terminal information.

10. The server of claim 8 or 9, wherein the controller (920) extracts at least one application downloadable within a specific time according to a data rate of the network (10-1, 10-2) based on the network information.

11. The server of any one of claims 8 to 10, wherein the controller (920) extracts at least one application that is provided by a service provider of the user terminal (100) based on the service provider information.

12. The server of any one of claims 8 to 11, wherein the controller (920) extracts at least one application according to a buying history and preference of the user based on the user information.

13. The server of claim 12, further comprising a database unit for storing the buying history and the preference of the user,
wherein the controller (920) extracts at lest one application according to the stored buying history and preference of the user.

14. The server of any one of claims 8 to 13, further comprising a storage unit (930) for storing at least one of a condition for the user terminal information, a condition for the network information, and a condition for the service provider information to extract an application,
wherein the controller (920) changes at least one of the condition for the user terminal information, the condition for the network information, and the condition for the service provider information.

## Patentansprüche

1. Benutzerendgerät (100) zum Herunterladen einer Anwendung von einem Server (105), wobei das Benutzerendgerät Folgendes umfasst:
eine Netzwerkschnittstelle (840) für den Zugriff auf den Server (105) über ein oder mehrere Netzwerke (10-1,10-2);
eine Anzeigeeinheit (820) zum Anzeigen einer Anwendungsliste; und
eine Steuerung (830) zum Steuern der Netzwerkschnittstelle (840), damit diese mindestens Benutzerendgerätinformationen, Netzwerkinformationen,
Dienstanbieterinformationen oder Benutzerinformationen zu dem Server (105) sendet und eine Anwendungsliste empfängt, die basierend auf mindestens den Benutzerendgerätinformationen, den Netzwerkinformationen, den Dienstanbieterinformationen oder den Benutzerinformationen erzeugt wird, und
zum Steuern der Anzeige der Anwendungsliste auf der Anzeigeeinheit (820);
wobei die Steuerung (830) dafür ausgelegt ist, das Hinzufügen von Prioritäten zu Eigenschaften zu steuern, die mindestens in den Benutzerendgerätinformationen,
den Netzwerkinformationen, den Dienstanbieterinformationen oder den Benutzerinformationen enthalten sind.

2. Benutzerendgerät nach Anspruch 1, wobei die Benutzerendgerätinformationen mindestens Folgendes umfassen: Hersteller, einen Modellnamen, eine Auflösung, CPU-Informationen, Speicherinformationen, Speicherkapazität oder Informationen in Bezug auf Anwesenheit/Abwesenheit eines Berührbildschirms des Benutzerendgeräts (100).

3. Benutzerendgerät nach Anspruch 1 oder 2, wobei die Netzwerkinformationen Informationen sind, die eine Datenrate eines Netzwerk (10-1, 10-2) betreffen, das zwischen dem Benutzerendgerät (100) und dem Server (105) verbunden ist.

4. Benutzerendgerät nach einem der Ansprüche 1 bis 3, wobei die Dienstanbieterinformationen Informationen sind, die eine Anwendung betreffen, die von einem Dienstanbieter des Benutzerendgeräts (100) bereitgestellt wird.

5. Benutzerendgerät nach einem der Ansprüche 1 bis 4, wobei die Benutzerinformationen mindestens Folgendes umfassen: ein Kaufprotokoll eines Benutzers des Benutzerendgeräts (100) und Präferenzinformationen des Benutzers.

6. Benutzerendgerät nach Anspruch 1, wobei die Steuerung (830) Folgendes steuert:
Hinzufügen von Kennzeichen, die Prioritäten der Eigenschaften darstellen, die mindestens in den Benutzerendgerätinformationen, den Netzwerkinformationen,
den Dienstanbieterinformationen oder den Benutzerinformationen enthalten sind,
und Senden der mindestens einen Information.

7. Benutzerendgerät nach einem der Ansprüche 1 bis 6, wobei die Steuerung (830) die Anzeige der Anwendungsliste auf dem Bildschirm gemäß den Eigenschaften steuert, die mindestens in den Benutzerendgerätinformationen, den Netzwerkinformationen, den Dienstanbieterinformationen oder den Benutzerinformationen enthalten sind.

8. Server (105), der Folgendes umfasst:
eine Netzwerkschnittstelle (910) für den Zugriff auf ein Benutzerendgerät (100) über ein oder mehrere Netzwerke (1010-2); und
eine Steuerung (920) zum Steuern der Netzwerkschnittstelle (910) zum Empfangen von dem Benutzerendgerät mindestens von Benutzerendgerätinformationen, Netzwerkinformationen,
Dienstanbieterinformationen oder Benutzerinformationen, zum Extrahieren mindestens einer Anwendung aus gespeicherten Anwendungen basierend mindestens auf den Benutzerendgerätinformationen, den Netzwerkinformationen,
den Dienstanbieterinformationen oder den Benutzerinformationen, zum Erzeugen einer Anwendungsliste unter Verwendung der extrahierten Anwendung und zum Senden der Anwendungsliste zu dem Benutzerendgerät (100);
wobei die Steuerung (920) dafür ausgelegt ist, die mindestens eine Anwendung basierend auf Prioritäten zu extrahieren, die zu Eigenschaften hinzugefügt sind,
die mindestens in den Benutzerendgerätinformationen, den Netzwerkinformationen, den Dienstanbieterinformationen oder den Benutzerinformationen enthalten sind.

9. Server nach Anspruch 8, wobei die Steuerung (920) mindestens eine Anwendung, die auf dem Benutzerendgerät (100) ausgeführt werden kann, basierend auf den Benutzerendgerätinformationen aus den gespeicherten Anwendungen extrahiert.

10. Server nach Anspruch 8 oder 9, wobei die Steuerung (920) mindestens eine Anwendung extrahiert, die innerhalb einer bestimmten Zeit gemäß einer Datenrate des Netzwerks (10-1, 0-2 1) basierend auf der Netzwerkinformationen heruntergeladen werden kann.

11. Server nach einem der Ansprüche 8 bis 10, wobei die Steuerung (920) mindestens eine Anwendung, die von einem Dienstanbieter des Benutzerendgeräts (100) bereitgestellt wird, basierend auf den Dienstanbieterinformationen extrahiert.

12. Server nach einem der Ansprüche 8 bis 11, wobei die Steuerung (920) mindestens eine Anwendung gemäß einem Kaufprotokoll und Benutzereinstellungen basierend auf den Benutzerinformationen extrahiert.

13. Server nach Anspruch 12, der ferner eine Datenbankeinheit zum Speichern des Kaufprotokolls und der Benutzereinstellungen umfasst,
wobei die Steuerung (920) mindestens eine Anwendung gemäß dem gespeicherten Kaufprotokoll und den Benutzereinstellungen extrahiert.

14. Server nach einem der Ansprüche 8 bis 13, der ferner eine Speichereinheit (930) zum Speichern von mindestens Folgendem umfasst: eines Zustands für die Benutzerendgerätinformationen, eines Zustands für die Netzwerkinformationen oder eines Zustands für die Dienstanbieterinformationen, um eine Anwendung zu extrahieren,
wobei die Steuerung (920) mindestens eines von Folgendem ändert: den Zustand für die Benutzerendgerätinformationen, den Zustand für die Netzwerkinformationen und den Zustand für die Dienstanbieterinformationen.

## Revendications

1. Terminal utilisateur (100) pour télécharger une application à partir d'un serveur (105), le terminal utilisateur comprenant :
une interface réseau (840) pour accéder au serveur (105) par l'intermédiaire d'un ou de plusieurs réseaux (10-1, 10-2) ;
une unité d'affichage (820) pour afficher une liste d'applications ; et
un contrôleur (830) destiné à piloter l'interface réseau (840) pour envoyer au serveur (105) au moins une des informations suivantes, à savoir des informations du terminal utilisateur, des informations de réseau, des informations du fournisseur de services et des informations d'utilisateur, et pour recevoir une liste d'applications qui est générée sur la base desdites au moins une des informations suivantes, à savoir les informations du terminal utilisateur, les informations de réseau, les informations du fournisseur de services et les informations d'utilisateur, et destiné à piloter l'affichage de la liste d'applications sur l'unité d'affichage (820) ;
cas dans lequel le contrôleur (830) est conçu pour piloter l'adjonction de priorités à des propriétés incluses dans lesdites au moins une des informations suivantes, à savoir les informations du terminal utilisateur, les informations de réseau, les informations du fournisseur de services et les informations d'utilisateur.

2. Terminal utilisateur selon la revendication 1, les informations du terminal utilisateur comprenant au moins l'un des postes suivants, à savoir un fabricant, un nom de modèle, une résolution, des informations concernant l'unité centrale CPU, des informations relatives au stockage, une capacité de stockage, et des informations relatives à la présence/à l'absence d'un écran tactile du terminal utilisateur (100).

3. Terminal utilisateur selon la revendication 1 ou 2, les informations de réseau étant des informations relatives à une vitesse de données d'un réseau (10-1, 10-2) lequel est connecté entre le terminal utilisateur (100) et le serveur (105).

4. Terminal utilisateur selon l'une quelconque des revendications 1 à 3, les informations du fournisseur de services étant des informations relatives à une application qui est fournie par un fournisseur de services du terminal utilisateur (100).

5. Terminal utilisateur selon l'une quelconque des revendications 1 à 4, les informations d'utilisateur comprenant au moins l'un des éléments suivants, à savoir un historique d'achat d'un usager du terminal utilisateur (100) et des informations de préférence de l'usager.

6. Terminal utilisateur selon la revendication 1, le contrôleur (830) pilotant l'adjonction de balises lesquelles représentent des priorités de propriétés incluses dans lesdites au moins une des informations suivantes, à savoir les informations du terminal utilisateur, les informations de réseau, les informations du fournisseur de services et les informations d'utilisateur, et envoyant ladite au moins une information.

7. Terminal utilisateur selon l'une quelconque des revendications 1 à 6, le contrôleur (830) pilotant l'affichage de la liste d'applications sur l'écran en fonction de propriétés incluses dans lesdites au moins une des informations suivantes, à savoir les informations du terminal utilisateur, les informations de réseau, les informations du fournisseur de services et les informations d'utilisateur.

8. Serveur (105) comprenant :
une interface réseau (910) pour accéder à un terminal utilisateur (100) par l'intermédiaire d'un ou de plusieurs réseaux (10-1, 10-2) ; et
un contrôleur (920) destiné à piloter l'interface réseau (910) pour recevoir, à partir du terminal utilisateur, au moins une des informations suivantes, à savoir des informations du terminal utilisateur, des informations de réseau, des informations du fournisseur de services et des informations d'utilisateur, pour extraire au moins une application à partir d'applications stockées sur la base desdites au moins une des informations suivantes, à savoir les informations du terminal utilisateur, les informations de réseau, les informations du fournisseur de services et les informations d'utilisateur, pour générer une liste d'applications en utilisant l'application ayant été extraite, et pour envoyer la liste d'applications au terminal utilisateur (100) ;
cas dans lequel le contrôleur (920) est conçu pour extraire ladite au moins une application sur la base de priorités ayant été ajoutées à des propriétés incluses dans lesdites au moins une des informations suivantes, à savoir les informations du terminal utilisateur, les informations de réseau, les informations du fournisseur de services et les informations d'utilisateur.

9. Serveur selon la revendication 8, le contrôleur (920) assurant l'extraction d'au moins une application exécutable au niveau du terminal utilisateur (100) à partir des applications stockées, sur la base des informations du terminal utilisateur.

10. Serveur selon la revendication 8 ou 9, le contrôleur (920) assurant l'extraction d'au moins une application apte à être téléchargée dans les limites d'une durée spécifique en fonction d'une vitesse de données du réseau (10-1, 10-2) sur la base des informations de réseau.

11. Serveur selon l'une quelconque des revendications 8 à 10, le contrôleur (920) assurant l'extraction d'au moins une application qui est fournie par un fournisseur de services du terminal utilisateur (100) sur la base des informations du fournisseur de services.

12. Serveur selon l'une quelconque des revendications 8 à 11, le contrôleur (920) assurant l'extraction d'au moins une application en fonction d'un historique d'achat et d'une préférence de l'utilisateur sur la base des informations d'utilisateur.

13. Serveur selon la revendication 12, comprenant en outre une unité à base de données pour stocker l'historique d'achat et la préférence de l'utilisateur,
cas dans lequel le contrôleur (920) extrait au moins une application en fonction de l'historique d'achat stocké et d'une préférence de l'utilisateur.

14. Serveur selon l'une quelconque des revendications 8 à 13, comprenant en outre une unité de stockage (930) pour stocker au moins l'une des conditions suivantes, à savoir une condition pour les informations du terminal utilisateur, une condition pour les informations de réseau, et une condition pour les informations du fournisseur de services afin d'extraire une application,
cas dans lequel le contrôleur (920) change au moins l'une des conditions suivantes, à savoir la condition pour les informations du terminal utilisateur, la condition pour les informations de réseau, et la condition pour les informations du fournisseur de services.
